# EUROPÄISCHE PATENTANMELDUNG

(11) **EP 4 508 972 A1**
(43) Veröffentlichungstag der Anmeldung: **19.02.2025**
(21) Anmeldenummer: 24183357.3
(22) Anmeldetag: 20.06.2024
(51) Int. Cl.: A01F 15/00, A01B 71/00

(54) **LANDWIRTSCHAFTLICHE MASCHINENANORDNUNG MIT EINEM FAHRERASSISTENZSYSTEM**

(30) Priorität: 15.08.2023 DE 102023121767
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bistritz, Philipp, 78224 Singen (DE); Bonhomme, Thierry, 57730 Macheren (FR); Dommange, Pierre, 57160 Scy-Chazelles (FR); Fischer, Josef, 88400 Biberach (DE); Henselmeyer, Hendrik, 49214 Bad Rothenfelde (DE); Obellianne, Steve, 57530 Courcelles-Chaussy (FR); Risse, Nicolas, 57645 Retonfey (FR); Rongvaux, Laurent, 54800 Tronville (FR); Wieckhorst, Jan Carsten, 29525 Uelzen Orsteil Hanstedt 2 (DE)
(74) Vertreter: CLAAS 365FarmNet GmbH

(57) **Zusammenfassung**

Die vorliegende Erfindung betrifft eine landwirtschaftliche Maschinenanordnung (1), welche eine landwirtschaftliche Arbeitsmaschine (2) und ein an die landwirtschaftliche Arbeitsmaschine (2) adaptiertes, als landwirtschaftliche Ballenpresse (5) ausgeführtes, Anbaugerät (4) umfasst, wobei die landwirtschaftliche Arbeitsmaschine (2) und das Anbaugerät (4) jeweils zur Einstellung von Einstellparametern (P) ansteuerbare Arbeitsaggregate (8, 9) umfassen. Die landwirtschaftliche Maschinenanordnung (1) umfasst ein den Betrieb optimierendes Fahrerassistenzsystem (13), welches so strukturiert ist, dass es einen Arbeitsmaschineneinstellautomaten (18.1) und einen Ballenpresseneinstellautomaten (18.2) bildet. Die Einstellautomaten (18.1, 18.2) bewirken in Abhängigkeit voneinander eine Optimierung der Arbeitsweise der landwirtschaftlichen Arbeitsmaschine (2) und der landwirtschaftlichen Ballenpresse (5).

## Beschreibung

Die vorliegende Erfindung betrifft eine landwirtschaftliche Maschinenanordnung gemäß dem Oberbegriff des unabhängigen Patentanspruchs 1.

Das Einstellen von einer landwirtschaftlichen Maschinenanordnung, die aus einer landwirtschaftlichen Arbeitsmaschine und einem Anbaugerät besteht, ist ein komplexer Vorgang, welcher von einer Bedienperson ein erhebliches Wissen sowohl über die landwirtschaftliche Arbeitsmaschine als auch das adaptierte Anbaugerät erfordert. Zudem muss die Bedienperson über agronomisches Wissen verfügen, um Auswirkungen von Einstellungen abschätzen zu können.

Aus der EP 0 838 141 A1 ist in diesem Zusammenhang beispielsweise ein System bekannt, bei dem ein als Pflug ausgeführtes Anbaugerät mit einem Rechner ausgestattet ist, der mit einer Bedien- und Anzeigeeinheit einer als Traktor ausgeführten landwirtschaftlichen Arbeitsmaschine gekoppelt ist. Der Bediener kann mittels der Bedien- und Anzeigeeinheit Einstellparameter für den Pflug vorgeben.

Neben dem notwendigen Wissen besteht weiterhin die Herausforderung, dass die Einstellparameter von landwirtschaftlicher Arbeitsmaschine und landwirtschaftlichem Anbaugerät einander wechselseitig beeinflussen können. Bei Fehleinstellungen kann das Arbeitsergebnis, sei es gemessen in Arbeitsqualität, erzielbarer Flächenleistung und/oder Verbrauch von Betriebsmitteln, negativ beeinflusst werden. Für einen wirtschaftlichen Betrieb einer solchen landwirtschaftlichen Maschinenanordnung ist es demnach relevant, dass die Maschinenanordnung so abgestimmt und effizient wie möglich betrieben wird. Die Vielzahl an unterschiedlichen Arbeitsmaschinen, insbesondere Traktoren, und Anbaugeräten innerhalb einer jeweiligen Gattung erschwert es einer Bedienperson, die Einstellparameter beider der Maschinenanordnung zugehörigen Vorrichtungen in der Weise einzustellen und an die jeweilige durch Umgebungs- und Ernte- bzw. Arbeitsbedingungen geprägte Betriebssituation anzupassen, dass ein optimaler Betrieb der Maschinenanordnung mit einem gewünschten Arbeitsergebnis ermöglicht wird.

Bei einigen landwirtschaftlichen Maschinenanordnungen ergibt sich eine besonders hohe Komplexität bei der Vorgabe von Einstellparametern. Eine solche landwirtschaftliche Maschinenanordnung stellt beispielsweise eine solche dar, welche eine landwirtschaftliche Arbeitsmaschine und eine daran adaptierte landwirtschaftliche Ballenpresse als Anbaugerät umfasst. Die Komplexität ergibt sich hierbei aufgrund der Vielzahl an für die Bildung eines Ballens erforderlichen und gleichzeitig auch ansteuerbaren Arbeitsaggregaten der landwirtschaftlichen Ballenpresse. Auch für eine besonders erfahrene Bedienperson mit einem umfangreichen Spezialwissen ergeben sich bei der Vorgabe von für den Betrieb optimalen Einstellparametern regelmäßig große Herausforderungen.

Es ist somit Aufgabe der Erfindung, eine solche landwirtschaftliche Maschinenanordnung derart weiterzubilden, dass sich diese durch eine vereinfachte und verbesserte Vorgabe bzw. Einstellbarkeit von Einstellparametern auszeichnet, welche die komplexen Zusammenhänge zur Erreichung eines optimierten Betriebes der landwirtschaftlichen Maschinenanordnung im Hinblick auf einen bevorstehenden durchzuführenden Arbeitsauftrag besser berücksichtigt.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 15 sind.

Demnach betrifft die vorliegende Erfindung eine landwirtschaftliche Maschinenanordnung, welche eine landwirtschaftliche Arbeitsmaschine und ein an die landwirtschaftliche Arbeitsmaschine adaptiertes Anbaugerät umfasst. Die landwirtschaftliche Arbeitsmaschine und das Anbaugerät umfassen jeweils zur Einstellung von Einstellparametern ansteuerbare Arbeitsaggregate. Die landwirtschaftliche Maschinenanordnung umfasst ein den Betrieb optimierendes Fahrerassistenzsystem, welches eine Recheneinheit und zumindest eine Bedien- und Anzeigeeinheit umfasst. Die Recheneinheit verarbeitet von maschineninternen Sensorsystemen generierte Informationen, externe Informationen, in der Recheneinheit hinterlegbare Informationen und mittels der Bedien- und Anzeigeeinheit vorgebbare Informationen. Die landwirtschaftliche Maschinenanordnung umfasst wenigstens eine Steuereinrichtung zur Steuerung und Regelung der landwirtschaftlichen Arbeitsmaschine und des Anbaugerätes. Die landwirtschaftliche Maschinenanordnung ist dadurch gekennzeichnet, dass das Anbaugerät als eine landwirtschaftliche Ballenpresse ausgebildet ist, wobei das Fahrerassistenzsystem so strukturiert ist, dass es einen Arbeitsmaschineneinstellautomaten und einen Ballenpresseneinstellautomaten bildet. Die jeweiligen Einstellautomaten bewirken in Abhängigkeit voneinander eine Optimierung der Arbeitsweise der landwirtschaftlichen Arbeitsmaschine und der landwirtschaftlichen Ballenpresse, wobei die von maschineninternen Sensorsystemen generierten Informationen, die externen Informationen, die in der Recheneinheit hinterlegbaren Informationen und die mittels der Bedien- und Anzeigeeinheit vorgebbaren Informationen Eingangssignale der jeweiligen Einstellautomaten bilden und Einstellparameter der landwirtschaftlichen Arbeitsmaschine und Einstellparameter der landwirtschaftlichen Ballenpresse Ausgangssignale der jeweiligen Einstellautomaten sind. Der jeweilige Einstellautomat ist dazu vorgesehen und eingerichtet, die Einstellparameter an die wenigstens eine Steuereinrichtung zu übermitteln, wobei die wenigstens eine Steuereinrichtung dazu vorgesehen und eingerichtet ist, die Arbeitsaggregate der landwirtschaftlichen Arbeitsmaschine und der landwirtschaftlichen Ballenpresse zur Einstellung der Einstellparameter anzusteuern.

Der Begriff Einstellparameter ist in diesem Zusammenhang so zu verstehen, dass dieser Betriebsparameter, wie beispielsweise eine Antriebsdrehzahl, einen hydraulischen oder pneumatischen Druck oder dergleichen, sowie Maschinenparameter, wie beispielsweise einen Abstand, eine Anzahl oder dergleichen, umfasst.

Durch das erfindungsgemäß strukturierte Fahrerassistenzsystem wird eine aufeinander abgestimmte Optimierung von Einstellparametern der landwirtschaftlichen Arbeitsmaschine und der daran adaptierten landwirtschaftlichen Ballenpresse bewirkt, wodurch der Betrieb der landwirtschaftlichen Maschinenanordnung insgesamt deutlich effizienter wird. So lässt sich durch das Fahrerassistenzsystem eine optimierte Anpassung der Einstellparameter an eine gegebene Betriebssituation bewirken, um den Betrieb der landwirtschaftlichen Maschinenanordnung effektiv und optimiert zu gestalten. Insbesondere lässt sich der äußerst komplexe Vorgang der Einstellung einer landwirtschaftlichen Maschinenanordnung mit einer landwirtschaftlichen Ballenpresse deutlich vereinfachen, wodurch Fehleinstellungen der landwirtschaftlichen Maschinenanordnung durch eine Bedienperson vermieden werden.

Gemäß einer vorteilhaften Weiterbildung der Erfindung ist vorgesehen, dass der Arbeitsmaschineneinstellautomat und der Ballenpresseneinstellautomat einen gemeinsamen Einstellautomaten bilden.

Somit lassen sich der Arbeitsmaschineneinstellautomat und der Ballenpresseneinstellautomat zentral durch das Fahrerassistenzsystem bedienen und ansteuern, um den Betrieb der eine komplexe Struktur aufweisenden landwirtschaftlichen Maschinenanordnung, bestehend aus der landwirtschaftlichen Arbeitsmaschine und der daran adaptierten landwirtschaftlichen Ballenpresse, wie sie aufgrund der Vielzahl an Arbeitsaggregaten der landwirtschaftlichen Ballenpresse entsteht, zu optimieren.

Gemäß einer vorteilhaften Weiterbildung der Erfindung ist vorgesehen, dass der Ballenpresseneinstellautomat dazu eingerichtet ist, arbeitsaggregat-spezifische Teileinstellautomaten auszubilden, wobei ein jeweiliger Teileinstellautomat dazu vorgesehen und eingerichtet ist, Einstellparameter eines jeweiligen Arbeitsaggregates der landwirtschaftlichen Ballenpresse als Ausgangssignal auszugeben.

Indem der Ballenpresseneinstellautomat dazu eingerichtet ist, arbeitsaggregat-spezifische Teileinstellautomaten auszubilden, wird sichergestellt, dass die Optimierung der Arbeitsweise der Maschinenanordnung unter Berücksichtigung eines durchzuführenden Ballenpressvorgangs auf einem Feld ganz spezifisch, nämlich arbeitsaggregat-abhängig beeinflusst werden kann.

Gemäß einer vorteilhaften Weiterbildung der Erfindung ist vorgesehen, dass das Fahrerassistenzsystem ein gemeinsames Regelwerk oder jeweils ein dem Arbeitsmaschineneinstellautomaten und dem Ballenpresseneinstellautomaten zugeordnetes Regelwerk umfasst, welches bzw. welche eine Optimierung der Arbeitsweise der landwirtschaftlichen Maschinenanordnung bewirken.

Gemäß einer bevorzugten Weiterbildung der Erfindung ist vorgesehen, dass die wenigstens eine Steuereinrichtung als ISO-basierte Steuereinrichtung ausgeführt ist, wobei die Steuereinrichtung einen Teil des Arbeitsmaschineneinstellautomaten und des Ballenpresseneinstellautomaten ausbildet.

Durch die Standardisierung der Kommunikation zwischen der Arbeitsmaschine und der landwirtschaftlichen Ballenpresse mittels des sogenannten ISO-Busses, wird deren Betrieb, d.h. die Einstellung und Ansteuerung, vereinfacht. Besonders dann, wenn mit landwirtschaftlichen Ballenpressen unterschiedlicher Hersteller gearbeitet wird, entfaltet die als ISO-basierte Steuereinrichtung ihre Vorzüge, da eine Kommunikation bzw. Datenaustausch von landwirtschaftlicher Arbeitsmaschine und landwirtschaftlicher Ballenpresse über den ISO-Bus unkompliziert, lediglich durch eine Kopplung von Maschine und Gerät, möglich wird.

Gemäß einer vorteilhaften Weiterbildung der Erfindung ist vorgesehen, dass die Einstellparameter der landwirtschaftlichen Arbeitsmaschine und die Einstellparameter der landwirtschaftlichen Ballenpresse eine mittels eines Antriebsaggregats und/oder Antriebsstrangs der landwirtschaftlichen Arbeitsmaschine einstellbare Fahrgeschwindigkeit, ein mittels eines Lenksystems der landwirtschaftlichen Arbeitsmaschine einstellbarer Lenkwinkel, eine Ausrichtung der landwirtschaftlichen Ballenpresse relativ zur landwirtschaftlichen Arbeitsmaschine, eine Drehzahl einer Zapfwelle der landwirtschaftlichen Arbeitsmaschine, ein mittels eines Hydrauliksystems der landwirtschaftlichen Arbeitsmaschine bereitzustellender hydraulischer Druck, ein Reifendruck zumindest eines Bodeneingriffsmittels der landwirtschaftlichen Arbeitsmaschine, ein Drehmoment und/oder eine Drehgeschwindigkeit einer Pick-up der landwirtschaftlichen Ballenpresse, ein Drehmoment und/oder eine Drehgeschwindigkeit eines Rotors der landwirtschaftlichen Ballenpresse, eine Aktivierung oder Deaktivierung von Schneidmessern der landwirtschaftlichen Ballenpresse, eine Drehzahl und/oder Anzahl von Hüben eines Raffers der landwirtschaftlichen Ballenpresse, ein in einer Presskammer der landwirtschaftlichen Ballenpresse aufzubringender Pressdruck, eine Aktivierung oder Deaktivierung einer Bindeeinrichtung der landwirtschaftlichen Ballenpresse und/oder eine Ablage eines mittels der landwirtschaftlichen Ballenpresse geformten Ballens sind.

Aufgrund der Vielzahl an mittels der Einstellautomaten beinflussbaren bzw. bestimmbaren Einstellparametern kann die Arbeitsweise der landwirtschaftlichen Maschinenanordnung ganzheitlich optimiert werden.

Gemäß einer vorteilhaften Weiterbildung der Erfindung ist vorgesehen, dass das Fahrerassistenzsystem zur Optimierung der Arbeitsweise der landwirtschaftlichen Maschinenanordnung auswählbare Strategien umfassen.

Hierdurch kann bereits vor Beginn der eigentlichen Optimierung vorgegeben werden, mit welcher übergeordneten Zielstellung die Bedienperson die landwirtschaftliche Maschinenanordnung betreiben will. Hierbei können die auswählbaren Strategien arbeitsmaschinenspezifische, ballenpressenspezifische Strategien und/oder eine Kombination aus beiden sein. Die Optimierung der Arbeitsweise der landwirtschaftlichen Maschinenanordnung basiert dabei auf technischem und agronomischem Wissen, welches miteinander kombiniert wird. Das technische und agronomische Wissen kann dabei als Regelwerk hinterlegt sein.

Vorzugsweise ist vorgesehen, dass die auswählbaren Strategien zumindest eine der Strategien "Ballendichtet", "Ballenqualität", "Energieverbrauch", "Durchsatz", "Bindematerial", "Lebensdauer" und/oder "Benutzerdefiniert" umfassen.

Die Strategien erlauben es der Bedienperson für ihre übergeordneten Zielstellungen spezifische Zielwerte, welche die Bedienperson bei der Durchführung des Ballenpressvorgangs erreichen bzw. einhalten will, abzurufen, auszuwählen oder vorzugeben. Für die Optimierungsstrategie "Ballendichte" kann beispielsweise der Zielwert "Gewicht Erntegut/Volumen Ballen", für die Optimierungsstrategie "Ballenqualität" beispielsweise die Zielwerte "Gewicht Erntegut/Volumen Ballen" und "Feuchtigkeit Erntegut pro Ballen", für die Optimierungsstrategie "Energieverbrauch" beispielsweise der Zielwert "Menge Kraftstoff/Zeiteinheit", für die Optimierungsstrategie "Durchsatz" beispielsweise der Zielwert "Gewicht oder Volumen Erntegut/Zeiteinheit", für die Optimierungsstrategie "Bindematerial" beispielsweise der Zielwert "Dicke und/oder Festigkeit des Bindematerials", und/oder für die Optimierungsstrategie "Lebensdauer" beispielsweise der Zielwert "Anzahl Betriebsstunden" definiert bzw. vorgegeben werden.

Gemäß einer vorteilhaften Weiterbildung der Erfindung ist vorgesehen, dass das Fahrerassistenzsystem dazu vorgesehen und eingerichtet ist, die Einstellparameter der landwirtschaftlichen Arbeitsmaschine und die Einstellparameter der landwirtschaftlichen Ballenpresse zur Optimierung der Arbeitsweise der landwirtschaftlichen Maschinenanordnung dialogbasiert zu bestimmen, wobei die Bestimmung zumindest eines Teils der Einstellparameter durch das Fahrerassistenzsystem vor Inbetriebnahme der landwirtschaftlichen Maschinenanordnung und/oder Aufnahme eines Ballenpressvorgangs durch die landwirtschaftlichen Maschinenanordnung erfolgt.

Hierdurch kann berücksichtigt werden, dass einige vorzunehmende Einstellungen unabhängig von vorherrschenden Bedingungen auf dem zu bearbeitenden Feld vorgenommen werden können. Die dialogbasierte Bestimmung von Einstellparametern kann natürlichsprachig erfolgen, d.h. durch einen vom Fahrerassistenzsystem vorgegebenen und geführten Dialog. Der Dialog ist vorzugsweise hierarchisch aufgebaut und kann dem Top-down-Ansatz folgen.

Gemäß einer vorteilhaften Weiterbildung der Erfindung ist vorgesehen, dass das Fahrerassistenzsystem ein Modul "Einstellungen" umfasst, welche einem dialogbasierten Abrufen, einer dialogbasierten Eingabe und/oder einer dialogbasierten Vorgabe von Betriebsparametern und/oder Maschinenparametern der landwirtschaftlichen Arbeitsmaschine und der landwirtschaftlichen Ballenpresse dienen.

Mittels des Moduls "Einstellungen" können vor der Inbetriebnahme der landwirtschaftlichen Maschinenanordnung und/oder Aufnahme eines Ballenpressvorgangs Grundeinstellungen der landwirtschaftlichen Maschinenanordnung geführt vorgenommen werden, deren Ausführung für den dann durchzuführenden Ballenpressvorgang grundlegend sind. Eine insbesondere weniger erfahrene Bedienperson wird somit nicht durch die Fülle an Betriebs- und/oder Maschinenparametern, die insbesondere bei einer landwirtschaftlichen Maschinenanordnung aus landwirtschaftlicher Arbeitsmaschine und landwirtschaftlicher Ballenpresse enorm groß ist, überfordert. Vielmehr wird die Bedienperson strukturiert durch die Einstellung geführt und nur mit den wesentlichen Parametern konfrontiert.

Gemäß einer vorteilhaften Weiterbildung der Erfindung ist vorgesehen, dass in der Recheneinheit gerätespezifische Einstellparameter für wenigstens eine Kombination aus einer landwirtschaftlichen Arbeitsmaschine und einer landwirtschaftlichen Ballenpresse wiederabrufbar hinterlegt sind.

Durch die wiederabrufbare Hinterlegung von Einstellparametern kann eine, vorzugsweise nicht editierbare, Basiskonfiguration der landwirtschaftlichen Maschinenanordnung bereitgestellt werden, die für die Optimierung der Arbeitsweise durch die Einstellautomaten herangezogen werden kann. Vorzugsweise können die gerätespezifischen Einstellparameter für die wenigstens eine Kombination als ein personifizierter Datensatz abspeicherbar und somit editierbar sein.

Gemäß einer bevorzugten Weiterbildung der Erfindung ist vorgesehen, dass in der Recheneinheit ein funktionales Modell der landwirtschaftlichen Arbeitsmaschine und der landwirtschaftlichen Ballenpresse hinterlegt ist, welches zumindest einen Teil der funktionalen Zusammenhänge der landwirtschaftlichen Arbeitsmaschine und der daran adaptierten landwirtschaftlichen Ballenpresse abbildet.

So können mittels des funktionalen Modells die verschiedenen Betriebssituationen der landwirtschaftlichen Arbeitsmaschine und der landwirtschaftlichen Ballenpresse modelliert werden, um in der jeweiligen Betriebssituation und unter Berücksichtigung der ausgewählten Regelstrategie eine Optimierung der Arbeitsweise der landwirtschaftlichen Maschinenanordnung zu bewirken.

Das funktionale Modell kann dabei verschieden ausgebildet sein. So ist es denkbar, dass das funktionale Modell auf klassischen Algorithmen basiert, welche die funktionalen Zusammenhänge der landwirtschaftlichen Arbeitsmaschine und der daran adaptierten landwirtschaftlichen Ballenpresse abbilden. Gleichermaßen ist es aber auch denkbar, dass das funktionale Modell ein Black-Box-Modell ist, welches beispielsweise auf einer künstlichen Intelligenz, vorzugsweise einem künstlichen neuronalen Netz, basiert, um die funktionalen Zusammenhänge der landwirtschaftlichen Arbeitsmaschine und der daran adaptierten landwirtschaftlichen Ballenpresse abzubilden.

Zur Abbildung der funktionalen Zusammenhänge der landwirtschaftlichen Arbeitsmaschine und der daran adaptierten landwirtschaftlichen Ballenpresse ist vorgesehen, dass das funktionale Modell mindestens ein n-dimensionales Kennfeld umfasst, welches zumindest einem Einstellparameter der landwirtschaftlichen Arbeitsmaschine und/oder der landwirtschaftlichen Ballenpresse zugeordnet ist, wobei der jeweilige Einstellparameter als Ausgangsgröße des mindestens einen n-dimensionalen Kennfeldes definiert ist.

Vorzugsweise ist vorgesehen, dass die von maschineninternen Sensorsystemen generierten Informationen, die externen Informationen, die in der Recheneinheit hinterlegbaren Informationen und die mittels der Bedien- und Anzeigeeinheit vorgebbare Informationen Eingangsgrößen des mindestens einen n-dimensionalen Kennfeldes bilden.

Weiter vorzugsweise ist es vorgesehen, dass die Recheneinheit das mindestens eine n-dimensionale Kennfeld im laufenden Betrieb, vorzugsweise zyklisch, mit den Einsatzbedingungen der landwirtschaftlichen Maschinenanordnung abgleicht. Bei einer Veränderung der Einsatzbedingungen kann das n-dimensionale Kennfeld angepasst oder ein anderes n-dimensionales Kennfeld für die Bestimmung des jeweiligen Einstellparameters herangezogen werden.

In der Recheneinheit kann mindestens ein n-dimensionales Initialkennfeld für den jeweiligen Einstellparameter hinterlegt sein, welches die Recheneinheit bei der ersten Ermittlung des zumindest einen Einstellparameters zugrunde gelegt. Hierzu kann beispielsweise auf den oder die Datensätze zurückgegriffen werden, die zu einem früheren Einsatzzeitpunkt der landwirtschaftlichen Maschinenanordnung in der Recheneinheit hinterlegt wurden.

Mittels des mindestens einen n-dimensionalen Kennfeldes lassen sich auch komplexe funktionale Zusammenhänge eines Systems aus der Maschinenanordnung und der Umgebung mit einem geringen rechnerischen Aufwand abbilden. Kennlinien des n-dimensionalen Kennfeldes können adaptiv an die jeweilige Situation angepasst werden, um Zusammenhänge beim Betrieb der landwirtschaftlichen Maschinenanordnung und Umgebungsbedingungen gesamtheitlich zu berücksichtigten, welche Einfluss auf die Regelstrategien haben. Die Anpassung der Kennlinien des n-dimensionalen Kennfeldes erfolgt dabei durch die jeweiligen Einstellautomaten, also den Arbeitsmaschineneinstellautomaten und den Ballenpresseneinstellautomaten.

Gemäß einer vorteilhaften Weiterbildung der Erfindung ist vorgesehen, dass das Fahrerassistenzsystem dazu vorgesehen und eingerichtet ist, mittels der zumindest einen Bedien- und Anzeigeeinheit einen Bedienablauf zur Einstellung eines zur Optimierung der Arbeitsweise der landwirtschaftlichen Maschinenanordnung anzupassenden Einstellparameters zu visualisieren

Dazu können der Bedienperson neben dem jeweiligen durch das Fahrerassistenzsystem bestimmten oder vorgeschlagenen Wert für einen Einstellparameter zusätzlich das oder die Arbeitsaggregate der landwirtschaftlichen Arbeitsmaschine und/oder der landwirtschaftlichen Ballenpresse angezeigt werden, an denen die entsprechende Einstellung durch Ansteuerung mittels der wenigstens einen Steuereinrichtung vorzunehmen ist. Ein Teil der Einstellung von Einstellparametern lässt sich dabei automatisch oder ferngesteuert vornehmen, während ein anderer Teil der vorzunehmenden Einstellung von Einstellparametern einen manuellen Eingriff erfordert. Die Darstellung des oder der Arbeitsaggregate, die durch manuellen Eingriff einzustellen sind, kann dabei in Form von einzelnen Piktogrammen bzw. Icons oder als eine sequentielle Bildfolge erfolgen.

Vorzugsweise ist es vorgesehen, dass die zumindest eine Bedien- und Anzeigeeinheit des Fahrerassistenzsystems Teil eines mobilen Datenverarbeitungsgerätes ist. Die Ausführung zumindest einer Bedien- und Anzeigeeinheit des Fahrerassistenzsystems als Bestandteil eines mobilen Datenverarbeitungsgerätes hat den Vorteil, dass die Bedienperson dieses mit sich führen kann, wenn der oder die zuvor bestimmten Einstellparameter an der landwirtschaftlichen Maschinenanordnung, insbesondere manuell, eingestellt werden. Das mobile Datenverarbeitungsgerät kann drahtlos oder drahtgebunden mit dem Fahrerassistenzsystem kommunizieren. Alternativ kann es vorgesehen sein, dass die zumindest eine Bedien- und Anzeigeeinheit auf einer entfernten, insbesondere von der landwirtschaftlichen Arbeitsmaschine und/oder der landwirtschaftlichen Ballenpresse entfernten Steuerungshardware läuft. Sofern vorliegend die Rede von einer entfernten Steuerungshardware ist, handelt es sich vorzugsweise ganz allgemein um eine maschinenanordnungsferne Datenverarbeitungshardware, bei der es sich beispielsweise um ein Cloud-basiertes Datenverarbeitungssystem handeln kann. Grundsätzlich kann es sich bei der maschinenanordnungsfernen Datenquelle aber auch um einen von der landwirtschaftlichen Maschinenanordnung entfernten Datenserver handeln, der über eine Internetverbindung oder dergleichen mit der landwirtschaftlichen Maschinenanordnung kommuniziert.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Maschinenanordnung, welche eine landwirtschaftliche Arbeitsmaschine, die in Gestalt eines Traktors ausgebildet ist, und eine daran adaptierte landwirtschaftliche Ballenpresse, die in Gestalt einer Quaderballenpresse ausgebildet ist, sowie ein Fahrerassistenzsystem umfasst;
- FIG. 2: eine schematische und exemplarische Darstellung eines Einstellautomaten des Fahrerassistenzsystems der landwirtschaftlichen Maschinenanordnung gemäß FIG. 1; und
- FIG. 3: eine schematische und exemplarische Darstellung des Fahrerassistenzsystems der landwirtschaftlichen Maschinenanordnung gemäß FIG. 1.

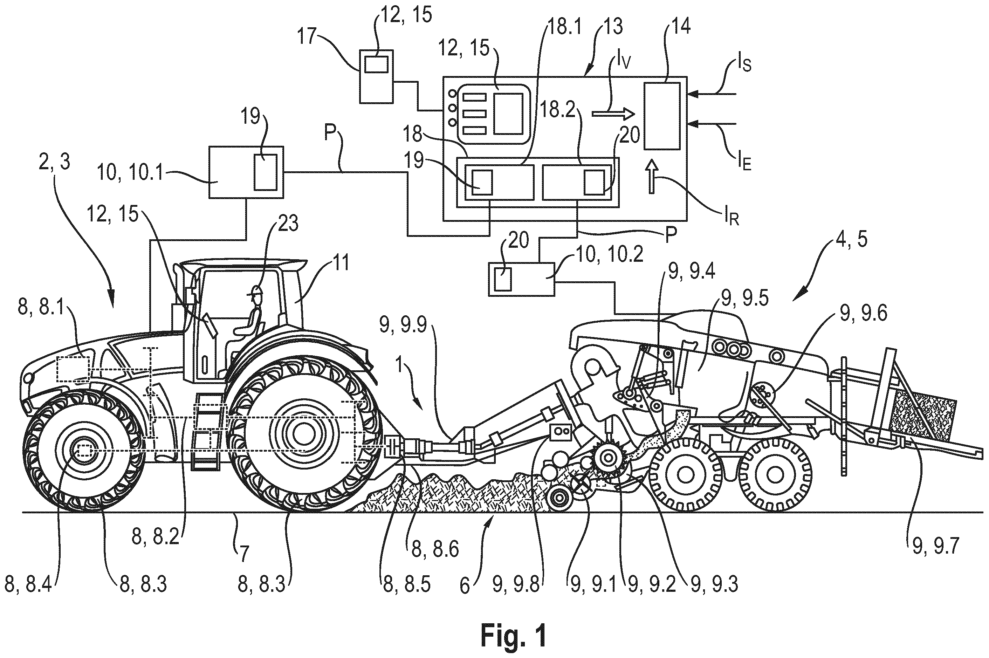

FIG. 1 zeigt eine landwirtschaftliche Maschinenanordnung 1, welche aus einer landwirtschaftlichen Arbeitsmaschine 2, hier in Gestalt eines Traktors 3, und eines an diese adaptierten Anbaugerätes 4, welches als landwirtschaftlichen Ballenpresse 5 ausgestaltet ist, besteht. Die landwirtschaftliche Ballenpresse 5 ist in den FIGs. in Gestalt einer Quaderballenpresse dargestellt, wobei gleichermaßen eine Rundballenpresse an die landwirtschaftliche Arbeitsmaschine 2, hier den Traktor 3, adaptiert sein könnte. In FIG. 1 ist die landwirtschaftliche Maschinenanordnung 1 dargestellt, während sie einen Ballenpressvorgang 6 auf einem Feld 7 durchführt.

Sowohl die landwirtschaftliche Arbeitsmaschine 2 als auch die daran adaptierte landwirtschaftliche Ballenpresse 5 der landwirtschaftlichen Maschinenanordnung 1 umfassen jeweils Arbeitsaggregate 8, 9, welche zur Einstellung von Einstellparametern P, die für die Durchführung des Ballenpressvorgangs 6 wesentlich sind, angesteuert werden können.

Arbeitsaggregate 8 der landwirtschaftlichen Arbeitsmaschine 2 sind beispielsweise ein Antriebsaggregat 8.1, das als Verbrennungsmotor, als hybrides Antriebsaggregat oder aber als elektromotorisches Antriebsaggregat ausgestaltet sein kann, ein Antriebsstrang 8.2 mit verschiedenen Getriebebaugruppen, Kupplungen und Wellen, Bodeneingriffsmittel 8.3, hier in Gestalt von Reifen dargestellt, die allerdings auch als Raupenlaufwerke ausgebildet sein können, ein Lenksystem 8.4 zum Lenken der landwirtschaftlichen Maschinenanordnung 1, eine Zapfwelle 8.5 zur Übertragung von Antriebsleistung an die landwirtschaftliche Ballenpresse 5 und/oder ein Hydrauliksystem 8.6.

Arbeitsaggregate 9 der Ballenpresse 5 sind beispielsweise eine Pick-up 9.1, ein Rotor 9.2, Schneidmesser 9.3, ein Raffer 9.4, eine Presskammer 9.5 mit einem Pressmittel, eine Bindeeinrichtung 9.6, eine - in den FIGs. nicht dargestellte - Heckklappe, eine Ballenablageeinrichtung 9.7, ein Hydrauliksystem 9.8 und/oder eine Deichsel 9.9.

Die mittels Ansteuerung der Arbeitsaggregate 8, 9 der landwirtschaftlichen Maschinenanordnung 1 einstellbaren Einstellparameter P sind eine Fahrgeschwindigkeit der landwirtschaftlichen Maschinenanordnung 1, die beispielsweise mittels des Antriebsaggregats 8.1 und/oder des Antriebsstrangs 8.2 der landwirtschaftlichen Arbeitsmaschine 2 vorgegeben werden kann, ein Lenkwinkel landwirtschaftlichen Arbeitsmaschine 2, der beispielsweise mittels des Lenksystems 8.4 der landwirtschaftlichen Arbeitsmaschine 2 eingestellt werden kann, eine Ausrichtung der landwirtschaftlichen Ballenpresse 5 relativ zur landwirtschaftlichen Arbeitsmaschine 2, die beispielsweise mittels der Deichsel 9.9 eingestellt werden kann, eine Drehzahl der Zapfwelle 8.5 der landwirtschaftlichen Arbeitsmaschine 2, ein von der landwirtschaftlichen Arbeitsmaschine 2 mittels des Hydrauliksystems 8.6 bereitzustellender hydraulischer Druck, ein Reifendruck zumindest eines Bodeneingriffsmittels 8.3 der landwirtschaftlichen Arbeitsmaschine 2, ein Drehmoment und/oder eine Drehgeschwindigkeit der Pick-up 9.1 der landwirtschaftlichen Ballenpresse 5, ein Drehmoment und/oder eine Drehgeschwindigkeit des Rotors 9.2 der landwirtschaftlichen Ballenpresse 5, ein Zeitpunkt zur Aktivierung oder Deaktivierung der Schneidmesser 9.3 der landwirtschaftlichen Ballenpresse 5, eine Drehzahl und/oder Anzahl von Hüben des Raffers 9.4 der landwirtschaftlichen Ballenpresse 5, ein in der Presskammer 9.5 der landwirtschaftlichen Ballenpresse 5 aufgebrachter Pressdruck, ein Zeitpunkt zur Aktivierung oder Deaktivierung der Bindeeinrichtung 9.6 der landwirtschaftlichen Ballenpresse 5 und/oder ein Zeitpunkt zur Ablage eines Ballens. Weitere Arbeitsaggregate 8, 9 der landwirtschaftlichen Maschinenanordnung 1 sowie Einstellparameter P der landwirtschaftlichen Maschinenanordnung 1, die für Durchführung des Ballenpressvorgangs 6 relevant seien können, sind durch die zuvor genannte Nennung von spezifischen, bevorzugten Arbeitsaggregaten 8, 9 sowie Einstellparametern P nicht ausgeschlossen.

Die Arbeitsaggregate 8 der landwirtschaftlichen Arbeitsmaschine 2 werden durch eine, vorzugsweise als Jobrechner ausgeführte, Steuereinrichtung 10.1 gesteuert und geregelt. Die Steuereinrichtung 10.1 ist dazu vorgesehen und eingerichtet, Einstellparameter P dieser Arbeitsaggregate 8 durch Ansteuerung der Arbeitsaggregate 8 einzustellen. In einer Kabine 11 der landwirtschaftlichen Arbeitsmaschine 2 kann eine Bedien- und Anzeigeeinheit 12 angeordnet sein, die mit der Steuereinrichtung 10.1 in Verbindung steht. Der landwirtschaftlichen Ballenpresse 5 kann gleichermaßen eine Steuereinrichtung 10.2 zugeordnet sein, die der Steuerung und Regelung von einem oder mehreren Arbeitsaggregaten 9 der landwirtschaftlichen Ballenpresse 5 dient. Die Steuereinrichtung 10.2 kann gleichfalls als Jobrechner ausgeführt sein. Die Steuereinrichtung 10.2 ist dazu vorgesehen und eingerichtet, Einstellparameter P dieser Arbeitsaggregate 9 durch Ansteuerung der Arbeitsaggregate 9 einzustellen. Die Steuereinrichtungen 10.1 und 10.2 der landwirtschaftlichen Maschinenanordnung 1 können -wie dargestellt - separat oder als eine gemeinsame Steuereinrichtung 10 ausgeführt sein, die an der landwirtschaftlichen Arbeitsmaschine 2 oder der landwirtschaftlichen Ballenpresse 5 angeordnet ist.

Der landwirtschaftlichen Maschinenanordnung 1 ist weiterhin ein Fahrerassistenzsystem 13 zugeordnet, welches der Einstellung und Optimierung des Betriebs der landwirtschaftlichen Maschinenanordnung 1 aus landwirtschaftlicher Arbeitsmaschine 2 und landwirtschaftlicher Ballenpresse 5 dient. Das Fahrerassistenzsystem 13 verfügt über eine Recheneinheit 14 und zumindest eine Bedien- und Anzeigeeinheit 15. Die Recheneinheit 14 verarbeitet von maschineninternen Sensorsystemen 16 generierte interne Informationen I_{S}, externe Informationen I_{E}, in der Recheneinheit 14 hinterlegbare Informationen I_{R} sowie mittels der Bedien- und Anzeigeeinheit 12, 15 vorgebbare Informationen I_{V}. Die Bedien- und Anzeigeeinheit 12 kann von der Bedien- und Anzeigeeinheit 15 in der Kabine 11 der landwirtschaftlichen Arbeitsmaschine 2 gebildet sein oder als eine zusätzliche Bedien- und Anzeigeeinheit ausgeführt sein, insbesondere als Teil einer mobilen Datenverarbeitungsvorrichtung 17 wie einem Mobilfunktelefon oder einem Tablet.

Das Fahrerassistenzsystem 13 ist dabei so strukturiert, dass es einen Arbeitsmaschineneinstellautomaten 18.1 und einen Ballenpresseneinstellautomaten 18.2 bildet, wobei die jeweiligen Einstellautomaten 18.1, 18.2 in Abhängigkeit voneinander eine Optimierung der Arbeitsweise der landwirtschaftlichen Arbeitsmaschine 2 und der landwirtschaftlichen Ballenpresse 5 bewirken. Das Fahrerassistenzsystem 13 umfasst dem Arbeitsmaschineneinstellautomaten 18.1 sowie dem Ballenpresseneinstellautomaten 18.2 zugeordnete Regelwerke 19, 20 zur Optimierung der Arbeitsweise der landwirtschaftlichen Arbeitsmaschine 2 sowie der landwirtschaftlichen Ballenpresse 5. Bevorzugt bilden der Arbeitsmaschineneinstellautomat 18.1 und der Ballenpresseneinstellautomat 18.2 einen gemeinsamen Einstellautomaten 18.

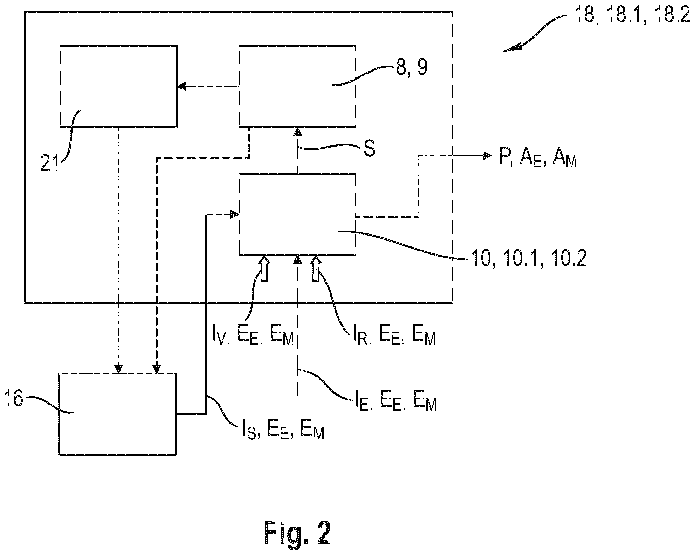

In FIG. 2 ist die Struktur der Einstellautomaten 18, 18.1, 18.2 schematisch dargestellt. Die Einstellautomaten 18, 18.1, 18.2 umfassen die Arbeitsaggregate 8, 9 der landwirtschaftlichen Arbeitsmaschine 2 und der landwirtschaftlichen Ballenpresse 5, maschineninterne Sensorsysteme 16 sowie die Steuereinrichtungen 10, 10.1, 10.2. Von der Steuereinrichtung 10, 10.1, 10.2 werden Steuersignale S an die Arbeitsaggregate 8, 9, mittels Datenübertragung, vorzugsweise mittels eines Bussystems übermittelt, welche der Einstellung eines oder mehrerer Arbeitsaggregate 8, 9 dienen. Zumindest ein Sensorsystem 16 überwacht das zumindest eine Arbeitsaggregate 8, 9 und gegebenenfalls einen oder mehrere dem Arbeitsaggregate 8, 9 zugeordnete Aktoren 21. Die von dem zumindest einen Sensorsystem 16 generierten Sensordaten werden mittels des Bussystems an die Steuereinrichtung 10, 10.1, 10.2 zur Auswertung übertragen und stellen die internen Informationen I_{S} dar. Darüber hinaus werden der Steuereinrichtung 10, 10.1, 10.2 externe Informationen I_{E}, die in der Recheneinheit 14 hinterlegbaren Informationen I_{R} sowie die mittels der Bedien- und Anzeigeeinheit 12, 15 vorgebbaren Informationen I_{V} bereitgestellt.

Die von dem zumindest einen Sensorsystem 16 bereitgestellten Sensordaten, also internen Informationen I_{S}, die in der Recheneinheit 14 hinterlegbaren Informationen I_{R}, die externen Informationen I_{E} sowie die mittels der Bedien- und Anzeigeeinheit 12, 15 vorgebbaren Informationen I_{V} bilden Eingangssignale E_{E} der jeweiligen Einstellautomaten 18, 18.1, 18.2. Mit A_{E} sind Ausgangssignale des jeweiligen Einstellautomaten 18, 18.1, 18.2 bezeichnet, wobei die Ausgangssignale A_{E} die Einstellparameter P darstellen. Der bzw. die Einstellautomaten 18, 18.1, 18.2 optimiert die Arbeitsweise der landwirtschaftlichen Arbeitsmaschine 2 sowie der landwirtschaftlichen Ballenpresse 5 autonom, d.h. der oder die Einstellautomaten 18, 18.1, 18.2 sind dazu vorgesehen und eingerichtet, die erforderlichen Einstellungen von Einstellparametern P der Arbeitsaggregate 8, 9 kontinuierlich autonom zu bestimmen und vorzugeben. Durch die Einstellautomaten 18, 18.1, 18.2 werden an die jeweils vorliegenden Arbeitsbedingungen angepasste Einstellparameter P bereitgestellt. Der Arbeitsmaschineneinstellautomat 18.1 und der Ballenpresseneinstellautomat 18.2 sind strukturell identisch, wie zuvor beschrieben, aufgebaut und arbeiten in gleicher Weise. Dabei bewirken die jeweiligen Einstellautomaten 18.1, 18.2 bzw. in dem gemeinsamen Einstellautomaten 18 zusammengefassten Einstellautomaten 18.1, 18.2 in Abhängigkeit voneinander eine Optimierung der Arbeitsweise der landwirtschaftlichen Arbeitsmaschine 2 und der landwirtschaftlichen Ballenpresse 5. Auf diese Weise werden die obigen Einstellautomaten 18, 18.1, 18.2 bereitgestellt, welche alle für den Ballenpressvorgang 6 sowie für die hierfür eingesetzte landwirtschaftliche Arbeitsmaschine 2 und die daran adaptierte landwirtschaftliche Ballenpresse 5 relevanten Größen untereinander koordiniert regelt. Es wird also insbesondere vermieden, dass von unterschiedlicher Seite konkurrierende und sich gegebenenfalls gegenseitig aushebelnde Ansteuerungen erfolgen. Vielmehr erfolgt die Ansteuerung aller relevanter Einstellparameter P "aus einer Hand". Der Ballenpresseneinstellautomat 18.2 kann dabei arbeitsaggregat-spezifische Teileinstellautomaten auszubilden. Ein jeweiliger Teileinstellautomat ist dann dazu vorgesehen und eingerichtet ist, die Einstellparameter P eines jeweiligen Arbeitsaggregates 9 der landwirtschaftlichen Ballenpresse 5 als Ausgangssignal A_{E} auszugeben.

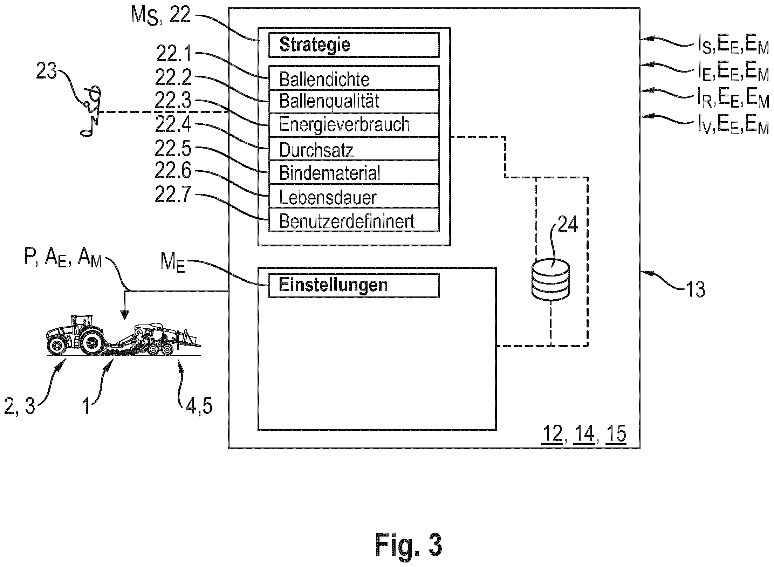

Das Fahrerassistenzsystem 13 umfasst zur Optimierung der Arbeitsweise der landwirtschaftlichen Maschinenanordnung 1 auswählbare Strategien 22 wie in FIG. 3 schematisch dargestellt. Hierdurch kann bereits vor Beginn der eigentlichen Optimierung vorgegeben werden, mit welcher übergeordneten Zielstellung eine Bedienperson 23 die landwirtschaftliche Maschinenanordnung 1 betreiben will. Hierbei können die auswählbaren Strategien 22 arbeitsmaschinenspezifische, ballenpressenspezifische Strategien 22 und/oder eine Kombination aus beiden sein.

Die auswählbaren Strategien 22 umfassen zumindest eine der zumindest eine der Strategien "Ballendichte" 22.1, "Ballenqualität" 22.2, "Energieverbrauch" 22.3, "Durchsatz" 22.4, "Bindematerial" 22.5, "Lebensdauer" 22.6 und/oder "Benutzerdefiniert" 22.7. Für jede Strategie 22 kann ein spezifischer Zielwert, welcher bei der Durchführung des Ballenpressvorgangs 6 erreicht bzw. eingehalten werden soll, hinterlegt, von der Bedienperson 23 mittels der Bedien- und Anzeigeeinheit 12, 15 auswählbar und/oder von der Bedienperson 23 mittels der der Bedien- und Anzeigeeinheit 12, 15 vorgebbar sein.

Für die Optimierungsstrategie "Ballendichte" 22.1 kann der Zielwert "Gewicht Erntegut/Volumen Ballen" definiert sein bzw. vorgeben werden. Für die Optimierungsstrategie "Ballenqualität" 22.2 können die Zielwerte "Gewicht Erntegut/Volumen Ballen" und "Feuchtigkeit Erntegut pro Ballen" definiert sein bzw. vorgegeben werden. Für die Optimierungsstrategie "Energieverbrauch" 22.3 kann der Zielwert "Menge Kraftstoff/Zeiteinheit" definiert sein bzw. vorgegeben werden. Für die Optimierungsstrategie "Durchsatz" 22.3 kann der Zielwert "Gewicht oder Volumen Erntegut/Zeiteinheit" definiert sein bzw. vorgegeben werten. Für die Optimierungsstrategie "Bindematerial" 22.5 kann der Zielwert "Dicke und/oder Festigkeit des Bindematerials" definiert sein bzw. vorgegeben werden. Für die Optimierungsstrategie "Lebensdauer" 22.6 kann der Zielwert "Anzahl Betriebsstunden" definiert sein bzw. vorgegeben werden. Die Strategie "Benutzerdefiniert" 22.7 ermöglicht es die verfügbaren Strategien 22.1 bis 22.6 zumindest teilweise miteinander mit variablen Anteilen zu verknüpfen.

FIG. 3 stellt neben den auswählbaren Strategien 22 weiterhin schematisch das Fahrerassistenzsystems 13 bei gleichzeitiger Veranschaulichung von Visualisierungs-, Bedien- und Strukturaspekten desselben dar. Das Fahrerassistenzsystem 13 weist ein Modul "Strategie" M_{S}, welches der Auswahl einer der zuvor genannten Strategien 22 dient, und ein Modul "Einstellungen" M_{E} auf, welches eine Konfiguration der landwirtschaftlichen Maschinenanordnung 1 durch die Bedienperson 23 zum Gegenstand hat. Im Rahmen der Ausführung des Moduls "Einstellungen" M_{E} können Daten über verschiedene landwirtschaftliche Arbeitsmaschinen 2 und landwirtschaftliche Ballenpresse 5, also Betriebsparameter und/oder Maschinenparameter, wahlweise aus der Recheneinheit 14 abgerufen (Informationen I_{R}) und/oder mittels der Bedien- und Anzeigeeinheit 12, 15 von der Bedienperson 23 vorgegeben werden (Informationen I_{V}). Die Daten umfassen dabei herstellerspezifischen Betriebs- und/oder Maschinenparameter der landwirtschaftlichen Arbeitsmaschine 2 und der landwirtschaftlichen Ballenpresse 5, also all jene Parameter, die von der Bedienperson 23 nicht zwingend spezifisch editiert werden müssen. Daneben gibt es bedienerspezifische Betriebsparameter und/oder Maschinenparameter der landwirtschaftlichen Arbeitsmaschine 2 und der landwirtschaftlichen Ballenpresse 5, die durch die Bedienperson 23 zugewiesen werden. Vorteilhaft ist es, wenn für unterschiedliche landwirtschaftliche Arbeitsmaschinen 2 und/oder unterschiedliche landwirtschaftliche Ballenpressen 5 gerätespezifische Betriebsparameter und/oder gerätespezifische Maschinenparameter in der Recheneinheit 14 wiederabrufbar hinterlegbar sind. Auf diese Weise kann eine, vorzugsweise nicht editierbare, Basiskonfiguration bereitgestellt werden, die für die Optimierung der Arbeitsweise der jeweiligen landwirtschaftlichen Maschinenanordnung 1 durch die jeweiligen Einstellautomaten 18, 18.1, 18.2 herangezogen werden kann.

Anhand der abrufbaren und/oder vorgebbaren Betriebsparameter und/oder Maschinenparameter erfolgt die Optimierung der Arbeitsweise der spezifischen landwirtschaftlichen Maschinenanordnung 1, nebst den von maschineninternen Sensorsystemen 16 generierten Informationen I_{S} sowie externen Informationen I_{E}. Somit werden nur die für die spezielle landwirtschaftlichen Maschinenanordnung 1 möglichen bzw. relevanten Einstellparameter P zur Optimierung der Arbeitsweise von dem Fahrerassistenzsystem 13 von den Einstellautomaten 18, 18.1, 18.2 ermittelt bzw. bestimmt und von den Steuereinrichtungen 10, 10.1, 10.2 durch Ansteuerung der Arbeitsaggregate 8, 9 eingestellt.

Die Ermittlung der Einstellparameter P kann dabei anhand eines funktionalen Modells der landwirtschaftlichen Arbeitsmaschine 2 und der landwirtschaftlichen Ballenpresse 5erfolgen, welches die funktionalen Zusammenhänge der landwirtschaftlichen Arbeitsmaschine 2 und der landwirtschaftlichen Ballenpresse 5 abbildet. Das funktionale Modell kann in der Recheneinheit 14 des Fahrerassistenzsystems 13, beispielsweise in einer Datenbank 24, in der auch abrufbare Betriebsparameter und/oder Maschinenparameter hinterlegt sein können, hinterlegt sein. Das funktionale Modell umfasst dabei mindestens ein n-dimensionales Kennfeld, welches zur Abbildung der funktionalen Zusammenhänge der landwirtschaftlichen Arbeitsmaschine 2 und der landwirtschaftlichen Ballenpresse 5 zumindest einem Einstellparameter P der landwirtschaftlichen Arbeitsmaschine 2 und/oder der landwirtschaftlichen Ballenpresse 5 zugeordnet ist. Die von maschineninternen Sensorsystemen 16 generierten Informationen I_{S}, die externen Informationen I_{E}, die in der Recheneinheit 14 hinterlegbaren Informationen I_{R} und die mittels der Bedien- und Anzeigeeinheit 12, 15 vorgebbaren Informationen I_{V} bilden die Eingangsgrößen Enn, der jeweilige Einstellparameter P definiert die Ausgangsgröße A_{M} des mindestens einen n-dimensionalen Kennfeldes.

Insgesamt ist das Fahrerassistenzsystem 13 dazu eingerichtet, die Einstellparameter P der landwirtschaftlichen Arbeitsmaschine 2 und der landwirtschaftlichen Ballenpresse 5 dialogbasiert zu bestimmen, die schließt auch die Konfiguration über die Module "Strategien" M_{S} und "Einstellungen" M_{E} ein. Das Fahrerassistenzsystem 13 kann allerdings auch dazu eingerichtet sein, die Einstellparameter P der landwirtschaftlichen Arbeitsmaschine 2 und der landwirtschaftlichen Ballenpresse 5 automatisch zu bestimmen. In beiden Fällen findet die Kommunikation, der Dialog mit der Bedienperson 23, natürlichsprachig statt. Das Fahrerassistenzsystem 13 ist ferner dazu vorgesehen und eingerichtet ist, mittels der zumindest einen Bedien- und Anzeigeeinheit 12, 15 einen Bedienablauf zur Einstellung eines zur Optimierung der Arbeitsweise der landwirtschaftlichen Maschinenanordnung 1 anzupassenden Einstellparameters P zu visualisieren. Dem Menüführungs - und Bedienkonzept des Fahrerassistenzsystems 13 liegt einheitlich zugrunde, Einstellempfehlungen, neben einem natürlichsprachigen Dialog, unter Zuhilfenahme von Icons, Piktogrammen, Illustrationen mit Lupen-Ansichten und/oder farblichen Hervorhebungen zu erläutern.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Maschinenanordnung | 10 | Steuereinrichtung |
| | | 10.1 | Steuereinrichtung |
| 2 | Landwirtschaftliche Arbeitsmaschine | 10.2 | Steuereinrichtung |
| 3 | Traktor | 11 | Kabine |
| 4 | Anbaugerät | 12 | Bedien- und Anzeigeeinheit |
| 5 | Landwirtschaftliche Ballenpresse | 13 | Fahrerassistenzsystem |
| 6 | Ballenpressvorgang | 14 | Recheneinheit |
| 7 | Feld | 15 | Bedien- und Anzeigeeinheit |
| 8 | Arbeitsaggregat Arbeitsmaschine/Traktor | 16 | Sensorsystem |
| | | 17 | Mobile Datenverarbeitungsvorrichtung |
| 8.1 | Antriebsaggregat Arbeitsmaschine/Traktor | | |
| | | 18 | Einstellautomat |
| 8.2 | Antriebsstrang Arbeitsmaschine/Traktor | 18.1 | Arbeitsmaschineneinstellautomat |
| | | 18.2 | Ballenpresseneinstellautomat |
| 8.3 | Bodeneingriffsmittel Arbeitsmaschine/Traktor | 19 | Regelwerk |
| 8.4 | Lenksystem Arbeitsmaschine/Traktor | 20 | Regelwerk |
| | | 21 | Aktor |
| 8.5 | Zapfwelle Arbeitsmaschine/Traktor | 22 | Strategie |
| 8.6 | Hydrauliksystem Arbeitsmaschine/Traktor | 22.1 | Strategien "Ballendichte" |
| | | 22.2 | Strategie "Ballenqualität" |
| 9 | Arbeitsaggregat Ballenpresse | 22.3 | Strategie "Energieverbrauch" |
| 9.1 | Pick-up Ballenpresse | 22.4 | Strategie "Durchsatz" |
| 9.2 | Rotor Ballenpresse | 22.5 | Strategie "Bindematerial" |
| 9.3 | Schneidmesser Ballenpresse | 22.6 | Strategie "Lebensdauer" |
| 9.4 | Raffer Ballenpresse | 22.7 | Strategie "Benutzerdefiniert" |
| 9.5 | Presskammer Ballenpresse | 23 | Bedienperson |
| 9.6 | Knotereinrichtung Ballenpresse | 24 | Datenbank |
| 9.7 | Ballenablageeinrichtung Ballenpresse | | |
| 9.8 | Hydrauliksystem Ballenpresse | P | Einstellparameter |
| 9.9 | Deichsel Ballenpresse | I_{S} | Information Sensorsystem |
| I_{E} | Externe Information | A_{E} | Ausgangssignal Einstellautomat |
| I_{R} | Hinterlegbare Information Recheneinheit | S | Steuersignal |
| I_{V} | Vorgebbare Information Bedien- und Anzeigeeinheit | E_{M} | Eingangsgröße Modell/Kennfeld |
| | | A_{M} | Ausgangsgröße Modell/Kennfeld |
| E_{E} | Eingangssignal Einstellautomat | M_{S} | Modul "Strategie" |
| | | M_{E} | Modul "Einstellungen" |

## Patentansprüche

1. Landwirtschaftliche Maschinenanordnung (1), welche eine landwirtschaftliche Arbeitsmaschine (2) und ein an die landwirtschaftliche Arbeitsmaschine (2) adaptiertes Anbaugerät (4) umfasst, wobei die landwirtschaftliche Arbeitsmaschine (2) und das Anbaugerät (4) jeweils zur Einstellung von Einstellparametern (P) ansteuerbare Arbeitsaggregate (8, 9) umfassen, wobei die landwirtschaftliche Maschinenanordnung (1) ein den Betrieb optimierendes Fahrerassistenzsystem (13) umfasst, welches eine Recheneinheit (14) und zumindest eine Bedien- und Anzeigeeinheit (12, 15) umfasst, wobei die Recheneinheit (14) von maschineninternen Sensorsystemen (16) generierte Informationen (I_{S}), externe Informationen (I_{E}), in der Recheneinheit (14) hinterlegbare Informationen (I_{R}) und mittels der Bedien- und Anzeigeeinheit (12, 15) vorgebbare Informationen (I_{V}) verarbeitet, wobei die landwirtschaftliche Maschinenanordnung (1) wenigstens eine Steuereinrichtung (10, 10.1, 10.2) zur Steuerung und Regelung der landwirtschaftlichen Arbeitsmaschine (2) und des Anbaugerätes (4) umfasst, **dadurch gekennzeichnet, dass** das Anbaugerät (4) als eine landwirtschaftliche Ballenpresse (5) ausgebildet ist, wobei das Fahrerassistenzsystem (13) so strukturiert ist, dass es einen Arbeitsmaschineneinstellautomaten (18.1) und einen Ballenpresseneinstellautomaten (18.2) bildet, wobei die jeweiligen Einstellautomaten (18.1, 18.2) in Abhängigkeit voneinander eine Optimierung der Arbeitsweise der landwirtschaftlichen Arbeitsmaschine (2) und der landwirtschaftlichen Ballenpresse (5) bewirken, wobei die von maschineninternen Sensorsystemen (16) generierten Informationen (I_{S}), die externen Informationen (I_{E}), die in der Recheneinheit (14) hinterlegbaren Informationen (I_{R}) und die mittels der Bedien- und Anzeigeeinheit (12, 15) vorgebbaren Informationen (I_{V}) Eingangssignale (E_{E}) der jeweiligen Einstellautomaten (18.1, 18.2) bilden, wobei Einstellparameter (P) der landwirtschaftlichen Arbeitsmaschine (2) und Einstellparameter (P) der landwirtschaftlichen Ballenpresse (5) Ausgangssignale (A_{E}) der jeweiligen Einstellautomaten (18.1, 18.2) sind, wobei der jeweilige Einstellautomat (18.1, 18.2) dazu vorgesehen und eingerichtet ist, die Einstellparameter (P) an die wenigstens eine Steuereinrichtung (10, 10.1, 10.2) zu übermitteln, wobei die wenigstens eine Steuereinrichtung (10, 10.1, 10.2) dazu vorgesehen und eingerichtet ist, die Arbeitsaggregate (8, 9) der landwirtschaftlichen Arbeitsmaschine (2) und der landwirtschaftlichen Ballenpresse (5) zur Einstellung der Einstellparameter (P) anzusteuern.

2. Landwirtschaftliche Maschinenanordnung (1) nach Anspruch 1, **dadurch gekennzeichnet, dass** der Arbeitsmaschineneinstellautomat (18.1) und der Ballenpresseneinstellautomat (18.2) einen gemeinsamen Einstellautomaten (18) bilden.

3. Landwirtschaftliche Maschinenanordnung (1) nach Anspruch 1 oder 2, **dadurch gekennzeichnet, dass** der Ballenpresseneinstellautomat (18.2) dazu eingerichtet ist, arbeitsaggregat-spezifische Teileinstellautomaten auszubilden, wobei ein jeweiliger Teileinstellautomat dazu vorgesehen und eingerichtet ist, Einstellparameter (P) eines jeweiligen Arbeitsaggregates (9) der landwirtschaftlichen Ballenpresse (5) als Ausgangssignal (A_{E}) auszugeben.

4. Landwirtschaftliche Maschinenanordnung (1) nach einem der Ansprüche 1 bis 3, **dadurch gekennzeichnet, dass** das Fahrerassistenzsystem (13) ein gemeinsames Regelwerk oder jeweils ein dem Arbeitsmaschineneinstellautomaten (18.1) und dem Ballenpresseneinstellautomaten (18.2) zugeordnetes Regelwerk (19, 20) umfasst, welches bzw. welche eine Optimierung der Arbeitsweise der landwirtschaftlichen Maschinenanordnung (1) bewirken.

5. Landwirtschaftliche Maschinenanordnung (1) nach einem der Ansprüche 1 bis 4, **dadurch gekennzeichnet, dass** die wenigstens eine Steuereinrichtung (10, 10.1, 10.2) als ISO-basierte Steuereinrichtung ausgeführt ist, wobei die Steuereinrichtung (10, 10.1, 10.2) einen Teil des Arbeitsmaschineneinstellautomaten (18.1) und des Ballenpresseneinstellautomaten (18.2) ausbildet.

6. Landwirtschaftliche Maschinenanordnung (1) nach einem der Ansprüche 1 bis 5, **dadurch gekennzeichnet, dass** die Einstellparameter (P) der landwirtschaftlichen Arbeitsmaschine (2) und die Einstellparameter (P) der landwirtschaftlichen Ballenpresse (5) eine mittels eines Antriebsaggregats (8.1) und/oder Antriebsstrangs (8.2) der landwirtschaftlichen Arbeitsmaschine (2) einstellbare Fahrgeschwindigkeit, ein mittels eines Lenksystems (8.4) der landwirtschaftlichen Arbeitsmaschine (2) einstellbarer Lenkwinkel, eine Ausrichtung der landwirtschaftlichen Ballenpresse (5) relativ zur landwirtschaftlichen Arbeitsmaschine (2), eine Drehzahl einer Zapfwelle (8.5) der landwirtschaftlichen Arbeitsmaschine (2), ein mittels eines Hydrauliksystems (8.6) der landwirtschaftlichen Arbeitsmaschine (2) bereitzustellender hydraulischer Druck, ein Reifendruck zumindest eines Bodeneingriffsmittels (8.3) der landwirtschaftlichen Arbeitsmaschine (2), ein Drehmoment und/oder eine Drehgeschwindigkeit einer Pick-up (9.1) der landwirtschaftlichen Ballenpresse (5), ein Drehmoment und/oder eine Drehgeschwindigkeit eines Rotors (9.2) der landwirtschaftlichen Ballenpresse (5), eine Aktivierung oder Deaktivierung von Schneidmessern (9.3) der landwirtschaftlichen Ballenpresse (5), eine Drehzahl und/oder Anzahl von Hüben eines Raffers (9.4) der landwirtschaftlichen Ballenpresse (5), ein in einer Presskammer (9.5) der landwirtschaftlichen Ballenpresse (5) aufzubringender Pressdruck, eine Aktivierung oder Deaktivierung einer Bindeeinrichtung (9.6) der landwirtschaftlichen Ballenpresse (5) und/oder eine Ablage eines mittels der landwirtschaftlichen Ballenpresse (5) geformten Ballens sind.

7. Landwirtschaftliche Maschinenanordnung (1) nach einem der Ansprüche 1 bis 6, **dadurch gekennzeichnet, dass** das Fahrerassistenzsystem (13) zur Optimierung der Arbeitsweise der landwirtschaftlichen Maschinenanordnung (1) auswählbare Strategien (22) umfasst.

8. Landwirtschaftliche Maschinenanordnung (1) nach Anspruch 7, **dadurch gekennzeichnet, dass** die auswählbaren Strategien (22) zumindest eine der Strategien "Ballendichte" (22.1), "Ballenqualität" (22.2), "Energieverbrauch" (22.3), "Durchsatz" (22.4), "Bindematerial" (22.5), "Lebensdauer" (22.6) und/oder "Benutzerdefiniert" (22.7) umfassen.

9. Landwirtschaftliche Maschinenanordnung (1) nach einem der Ansprüche 1 bis 8, **dadurch gekennzeichnet, dass** das Fahrerassistenzsystem (13) dazu vorgesehen und eingerichtet ist, die Einstellparameter (P) der landwirtschaftlichen Arbeitsmaschine (2) und die Einstellparameter (P) der landwirtschaftlichen Ballenpresse (5) zur Optimierung der Arbeitsweise der landwirtschaftlichen Maschinenanordnung (1) dialogbasiert zu bestimmen, wobei die Bestimmung zumindest eines Teils der Einstellparameter (P) durch das Fahrerassistenzsystem (13) vor Inbetriebnahme der landwirtschaftlichen Maschinenanordnung (1) und/oder Aufnahme eines Ballenpressvorgangs (6) durch die landwirtschaftlichen Maschinenanordnung (1) erfolgt.

10. Landwirtschaftliche Maschinenanordnung (1) nach einem der Ansprüche 1 bis 9, **dadurch gekennzeichnet, dass** das Fahrerassistenzsystem (13) ein Modul "Einstellungen" (M_{E}) umfasst, welche einem dialogbasierten Abrufen, einer dialogbasierten Eingabe und/oder einer dialogbasierten Vorgabe von Betriebsparametern und/oder Maschinenparametern der landwirtschaftlichen Arbeitsmaschine (2) und der landwirtschaftlichen Ballenpresse (5) dienen.

11. Landwirtschaftliche Maschinenanordnung (1) nach einem der Ansprüche 1 bis 10, **dadurch gekennzeichnet, dass** in der Recheneinheit (14) gerätespezifische Einstellparameter (P) für wenigstens eine Kombination aus einer landwirtschaftlichen Arbeitsmaschine (2) und einer landwirtschaftlichen Ballenpresse (5) wiederabrufbar hinterlegt sind.

12. Landwirtschaftliche Maschinenanordnung (1) nach einem der Ansprüche 1 bis 11, **dadurch gekennzeichnet, dass** in der Recheneinheit (14) ein funktionales Modell der landwirtschaftlichen Arbeitsmaschine (2) und der landwirtschaftlichen Ballenpresse (5) hinterlegt ist, welches zumindest einen Teil der funktionalen Zusammenhänge der landwirtschaftlichen Arbeitsmaschine (2) und der daran adaptierten landwirtschaftlichen Ballenpresse (5) abbildet.

13. Landwirtschaftliche Maschinenanordnung (1) nach Anspruch 12, **dadurch gekennzeichnet, dass** das funktionale Modell mindestens ein n-dimensionales Kennfeld umfasst, welches zur Abbildung der funktionalen Zusammenhänge der landwirtschaftlichen Arbeitsmaschine (2) und der daran adaptierten landwirtschaftlichen Ballenpresse (5) zumindest einem Einstellparameter (P) der landwirtschaftlichen Arbeitsmaschine (2) und/oder der landwirtschaftlichen Ballenpresse (5) zugeordnet ist, wobei der jeweilige Einstellparameter (P) als Ausgangsgröße (A_{M}) des mindestens einen n-dimensionalen Kennfeldes definiert ist.

14. Landwirtschaftliche Maschinenanordnung (1) nach Anspruch 13, **dadurch gekennzeichnet, dass** die von maschineninternen Sensorsystemen (16) generierten Informationen (I_{S}), die externen Informationen (I_{E}), die in der Recheneinheit (14) hinterlegbaren Informationen (I_{R}) und die mittels der Bedien- und Anzeigeeinheit (12, 15) vorgebbare Informationen (I_{V}) Eingangsgrößen (Enn) des mindestens einen n-dimensionalen Kennfeldes bilden.

15. Landwirtschaftliche Maschinenanordnung (1) nach einem der Ansprüche 1 bis 14, **dadurch gekennzeichnet, dass** das Fahrerassistenzsystem (13) dazu vorgesehen und eingerichtet ist, mittels der zumindest einen Bedien- und Anzeigeeinheit (12, 15) einen Bedienablauf zur Einstellung eines zur Optimierung der Arbeitsweise der landwirtschaftlichen Maschinenanordnung (1) anzupassenden Einstellparameters (P) zu visualisieren.
